# EUROPEAN PATENT SPECIFICATION

(11) **EP 2 659 131 B1**
(45) Date of publication and mention of the grant of the patent: **28.01.2015**
(21) Application number: 11826143.7
(22) Date of filing: 16.12.2011
(51) Int. Cl.: F03D 1/00, F03D 11/04

(54) **METHOD AND APPARATUS FOR MOUNTING A WIND POWER PLANT IN A HIGH BASE STRUCTURE**
VERFAHREN UND VORRICHTUNG ZUR MONTAGE EINER WINDENERGIEANLAGE AUF EINER HOHEN BASISSTRUKTUR
MÉTHODE ET APPAREIL DE MONTAGE D'UNE CENTRALE ÉOLIENNE DANS UNE STRUCTURE BASE ÉLEVÉE

(30) Priority: 28.12.2010 FI 20106376
(43) Date of publication of application: 06.11.2013
(73) Proprietor: EASYWIND OY, 64700 Teuva (FI)
(72) Inventor: LUHTALA, Pekka, FI-66300 Jurva (FI); SIPOLA, Marko, FI-02170 Espoo (FI)
(74) Representative: Tampereen Patenttitoimisto Oy
(86) International application number: PCT/FI2011/051117
(87) International publication number: WO 2012/089916

(56) References cited:
- WO-A1-2008/084971
- WO-A2-2010/129642
- DE-A1- 10 111 280
- US-A1- 2009 087 311
- US-A1- 2010 044 330

## Description

The invention relates to a method according to the preamble of claims 1 and 6, and an apparatus according to the preamble of claims 10 and 12.

Low and flat coasts, such as, for example, the coastal areas along the Gulf of Bothnia in Finland, have been found advantageous wind power sites in view of, for example, land use and wind conditions. At present, wind power plants to be constructed offshore, in the vicinity of the coast (so-called offshore power plants) are normally installed on top of a base structure to be anchored to the sea floor. The base structure, which is normally made of concrete, is anchored at its bottom to the sea floor, and it is so high that its upper part extends above the water surface. Most often, such a high base structure is assembled of elements which are smaller than the whole base structure and brought to and permanently joined together at the site of anchoring of the base structure. After the installation of the base structure, the wind power plant is lifted on top of the base structure by means of cranes (crane vessels).

The reason for using a high base structure may also be the need to influence the vibration characteristics of the mast. By means of the mast installed on the high base structure (or the so-called hybrid tower formed by these) it is possible to influence the specific frequencies of the mast and thereby to change the ratios between the excitation oscillations and the specific frequencies of the structures of the wind power plant. For this reason, the use of the high base structure is often well founded in land areas as well.

At present, the assembly of wind power plants onto a high base structure is performed offshore in the same way as in land areas, by bringing the mast and the other parts of the wind power plant in pieces to the installation site and by lifting and joining these pieces together and positioning them on top of the high base structure by means of large cranes. The elements of the mast of the wind power plant to be installed offshore in shallow water, and the other elements of the wind power plant to be connected to the mast, are brought to the planned installation site by, for example, a transport and crane vessel. The cranes to be used must always be taller than the wind power plant to be assembled; in other words, the taller and heavier the wind power plants to be erected, the larger and taller the cranes needed. Due to recent increase in the power and size of wind power units, the crane vessels used for installing in areas covered by water must therefore be sufficiently large and stable with respect to their size and tonnage to secure the safe erection of the power plants in spite of possible wind and heavy sea. Of course, when installing large wind power units (larger than 1 MW), it is technically very challenging and expensive to meet the requirements, particularly e.g. when wind power plants are installed in shallow coastal areas where, for example, the low water depth sets limits on the draught of the crane vessels to be used.

At present, a method and an apparatus are known, in which, for assembling the wind power plant, a particular installation structure is built around the wind power plant, which installation structure is transported and installed at the mounting site of the wind power plant. By means of such an installation structure, the elements of the mast of the wind power plant are placed on top of each other and joined to each other in such a way that the elements are transferred one by one from the outside of the installation structure to the inside of the installation structure, where the next mast element to be installed in the wind power plant is always fitted underneath the preceding elements brought to the inside, placed on top of each other and already fastened to each other. Such a method is presented in the applicant's previous patent application FI 20096161 (WO2011/055021) and, for example, in publications WO2010/129642 and in US 2009/0087311. In the method according to the latter document, the nacelle part of the wind power plant, in which e.g. the generator and the gearbox are placed, must be installed in a dedicated nacelle construction which is movable in the height direction of the mast and which comprises an opening, through which the mast of the wind power plant extends, and by means of which the generator part can be moved to the top of the mast or to another height as desired. Consequently, such a method is only suitable for a wind power plant construction of a dedicated design but not, for example, for such very commonly used wind power plants, in which the nacelle part is fastened to the top of the mast without fitting the mast through it. In the solution according to the applicant's previous patent application FI 20096161, the nacelle part is installed on top of the uppermost element of the mast already at the stage when the uppermost mast element to be installed first has risen above the installation structure. Thus, it does not need to be hoisted even nearly as high as in those solutions of prior art, in which the nacelle part is hoisted on top of the finished mast of full length. Even if these above-mentioned methods and apparatuses have the advantage of not requiring as large cranes as when conventional methods are applied, they still have the disadvantage that they are not, in their present form, designed for assembling the mast of a wind power plant on top of a high base structure and thus not for installing wind power plants in the above mentioned way, for example, in shallow waters in coastal areas. As already mentioned above, the use of a high base structure made of concrete is presently common also in land areas (for example, for the above mentioned reason), so that also in these situations, one must still resort to the use of tall cranes in the conventional way, because the installation structures of the above described kind are not, in their presently known form as such, suitable for these situations.

It is an aim of the invention to introduce a novel method for eliminating drawbacks relating to the above-mentioned methods of installation and assembly of wind power plants of prior art, and for facilitating the installation of wind power plants on top of high base structures, for example, when the wind power plant is installed in shallow waters in coastal areas or, for example, when the wind power plant is installed in land areas and the high base structure is used to affect the oscillation characteristics and strength of the mast of the wind power plant. In particular, the aim of the invention is to introduce a method by which a wind power plant can be assembled on top of a high base structure from elements by hoisting them on top of each other and by installing them without high cranes and, at installation sites covered by water, without large crane vessels. Another aim of the invention is to introduce an apparatus according to the method of the invention.

The inventive idea of the method according to the invention is that for the installation structure intended for assembling the wind power plant, means are provided in connection with the high base structure such that the wind power plant can also be assembled on top of a high base structure by utilizing the method disclosed in the applicant's previous patent application FI 20096161. It should be noted that in this context, a high base structure refers to a base structure having a height at least equal to the height of one element of the mast to be assembled of elements (normally, at least about 8 metres). The invention also presents two alternative solutions, of which the first one is best suited for a situation in which the wind power plant is placed on top of a high base structure to be installed on terra firma, and the other for a situation in which the wind power plant is placed in shallow waters in a coastal area. In the first mentioned solution, the installation structure is formed in connection with the base structure in such a way that a jacking device used as the lifting device of the installation structure is installed in the base structure, and the base structure itself is used as the frame for the installation structure, wherein after the assembly of the wind power plant, the base structure used as the installation structure remains at the installation site of the wind power plant, and only the jacks and other parts of the jacking device used for lifting the elements of the wind power plant are disengaged from the base structure and removed from the installation site of the wind power plant. In the latter case, the installation structure is separate from the base structure. Thus, a separate installation support is formed between the base structure and the installation structure, to support the installation structure to the base structure, around its top. The installation support may be integrated in the base structure, or it may be a separate part formed of one or several elements, to be fastened to the top of the base structure and to be removed after use. To put it more precisely, the method according to the invention is characterized in what will be presented in the characterizing part of claims 1 and 6, and the apparatus according to the invention is characterized in what will be presented in the characterizing part of claims 10 and 12.

In the following, the invention will be described in more detail with reference to the appended drawings, in which
Fig. 1 a shows, in a slanted view from above, a base structure according to the invention for a wind power plant, provided with an installation structure for assembling the mast of the wind power plant;
Fig. 1b shows the base structure according to Fig. 1a seen from the side;
Fig. 2a shows an installation structure according to the invention, separate from the base structure and installed on top of the tall base structure during the installation of the tower of the wind power plant, in a slanted view from above;
Fig. 2b shows the installation structure according to Fig. 2a, installed on top of the tall base structure, seen in a front view;
Fig. 2c shows the installation structure according to the preceding figures, installed on top of the high base structure, seen in a side view;
Fig. 3a shows, in a slanted view from above, a base structure and an installation support mounted on its upper part, on top of which *e.g.* the installation structure of Figs. 2 can be mounted;
Fig. 3b shows the base structure and the installation support according to

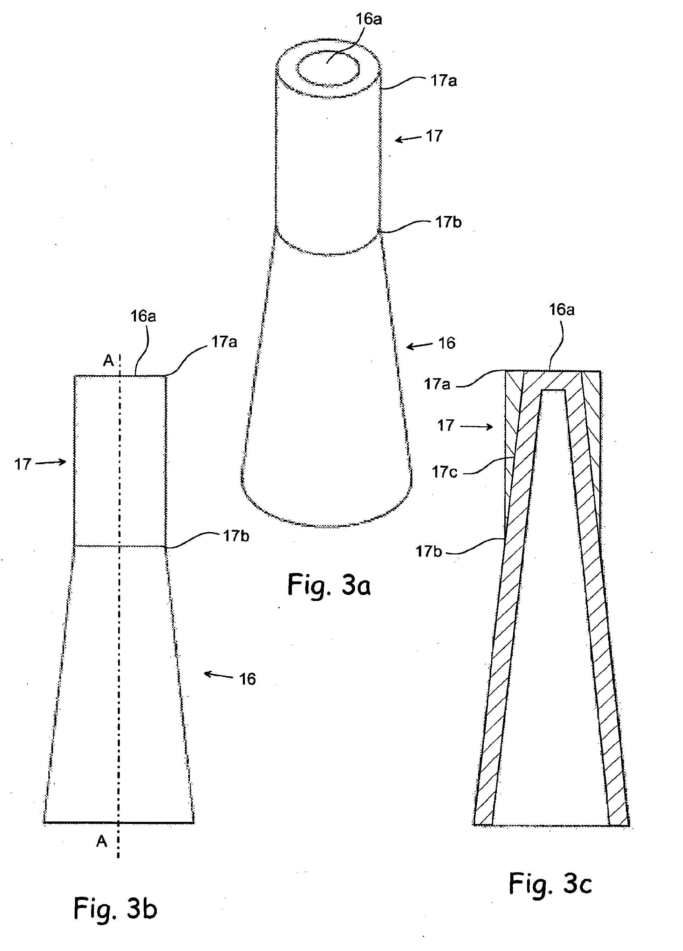

Fig. 3a seen in a side view;
Fig. 3c shows the cross-section A-A of the base structure and the installation support shown in Fig. 3b;

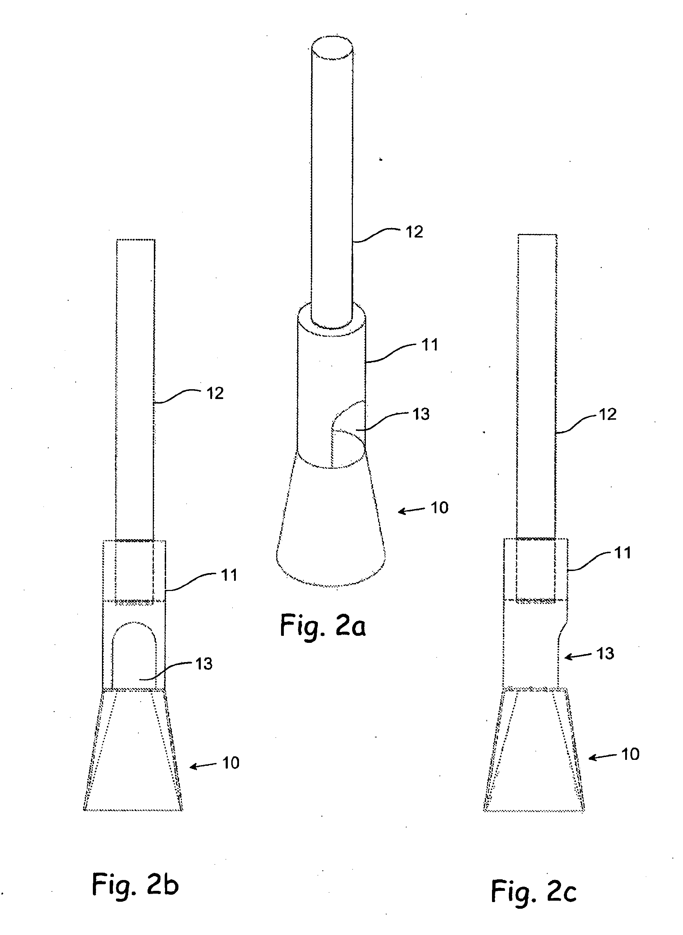

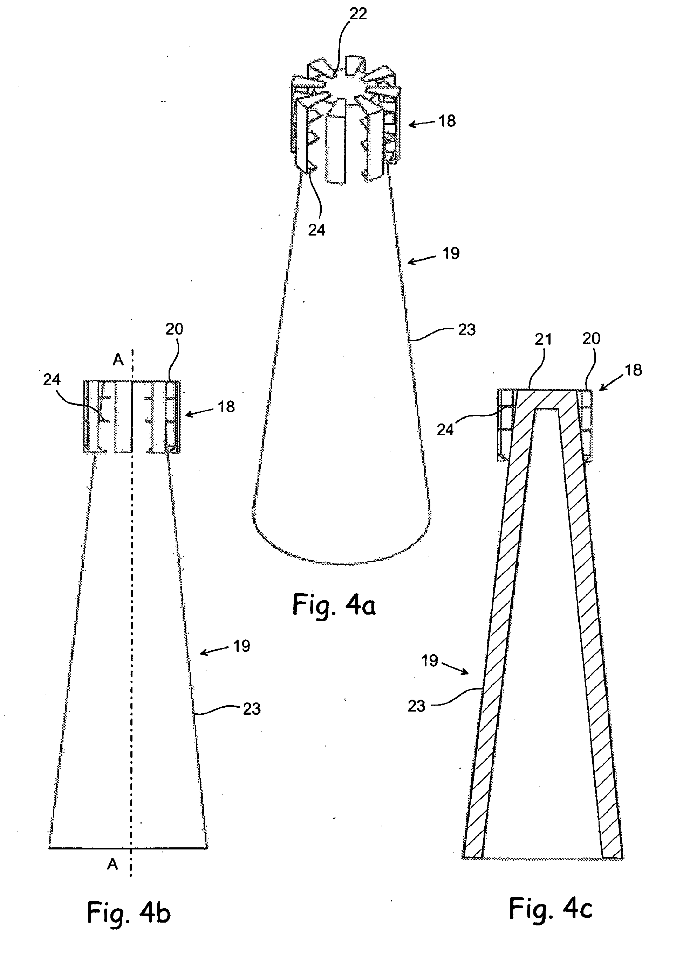

Fig. 4a shows, in a slanted view from above, another base structure and an installation support mounted on its upper part, on top of which e.g. the installation structure of Figs. 2 can be mounted;
Fig. 4b shows the base structure and the installation support according to
Fig. 4a seen in a side view; and
Fig. 4c shows the cross-section A-A of the base structure and the installation support shown in Fig. 4b.

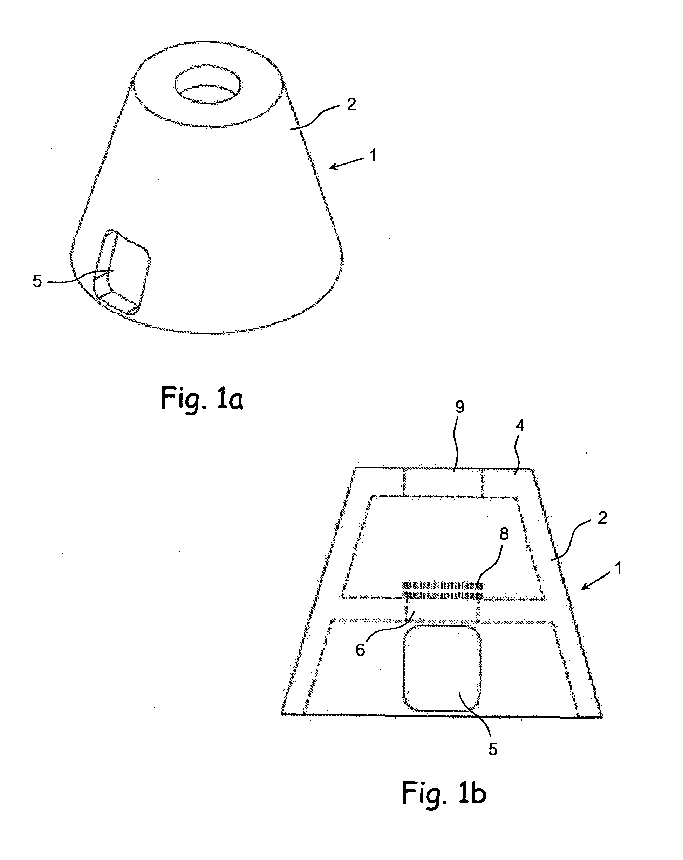

The base structure 1 shown in Figs. 1 a and 1 b is a high base structure for a wind power plant, made of reinforced concrete or a corresponding material, provided with an installation structure operating in the inventive way by the principle presented in the applicant's previous patent application FI 20096161. As seen from Fig. 1b, this base structure 1 which is hollow inside comprises an upwards tapering conical side wall 2 and an intermediate floor 3 and an upper floor 4. The lower part of the side wall 2 is provided with an inlet opening 5. In connection with a lifting opening 6 in the intermediate floor 3, a jacking device 8 is provided, by means of which the elements (not shown in Figs. 1a and 1b) of the mast of the wind power plant transferred through the inlet opening 5 to the inside of the space 7 enclosed by the side wall 2 of the base structure can be lifted upwards so that the next lower element of the mast of the wind power plant is fixed underneath the preceding upper element of the mast in such a way that the uppermost element of the mast is brought into the base structure first, and then the next lower elements of the mast and finally the lowermost element of the mast. The upper floor 4 is also provided with an installation opening 9 which is similar to the lifting opening 6 in the intermediate floor 3 and from which the mast of the wind power mill to be lifted upwards is hoisted upwards. The lowermost element of the mast can be connected at its lower part solely to the installation opening 9 in the upper floor, or alternatively, the lowermost element and part of the next upper element can be fixed to both the lifting opening 6 in the intermediate floor 3 and the installation opening 9 in the upper floor 4. With the last mentioned connecting method, the fixing of the mast becomes particularly sturdy and rigid and such that bending moments effective on the foot of the mast are not transferred as such to the base structure 1 but they cause primarily compressive and shearing stresses on the side wall 2 of the base structure 1, with respect to which stresses the concrete structure bears heavy loads. Thus, the first mentioned fastening method can be used for lower and smaller wind power plants, and the last mentioned method for larger wind power plants equipped with a taller mast. In this case, the height of the base structure is > 2 x the height of one element of the mast. The assembly of the mast is followed by removing the jacking device 8 used for lifting the elements of the mast, as well as the necessary equipment used for transferring the elements of the mast of the wind power plant which have been presented in the applicant's previous patent application FI 20096161.

Figures 2a to 2c show principle views of erecting the mast of a wind power plant on top of a tall base structure 10 by applying a separate installation structure 11. Here, the installation structure 11 used for assembling the mast 12 is formed on top of a high base structure 10. The inlet opening 13 of the installation structure is thus on top of the high base structure; that is, the elements of the mast 12 must be introduced to the installation structure by means of a lifting device, but this lifting device does not need to be nearly as large as a lifting device used for erecting a wind power plant by conventional methods. In this embodiment of the invention, the high base structure 10 is a base structure similar to a high base structure known as such, with an integrated installation support 14 formed at the top of the foundation structure. As seen from Figs. 2a to 2c, the end face of the top of the base structure 10 is clearly larger in its diameter than a conventional end face having the size of the outer diameter of the mast, so that the installation structure can be placed on top of it, for assembling the wind power plant. Such a high base structure 10 can be composed of, for example, elements smaller than the whole foundation structure, which are transferred as elements to the installation site of the wind power plant and connected to each other at the site of assembly of the wind power plant, to form the high base structure 10 shown in Figs. 2a to 2c, with an installation support 14 enabling the connection of the installation structure 11 integrated in the side wall 15 of the base structure 10. Also in this case, the installation structure 11 is, for example, an installation structure similar to that presented in the applicant's earlier patent application FI 20096161, by which the assembly of the wind power plant is performed in the way presented in said application. For this, the installation structure 11 is mounted on top of the tall base structure 10 in such a way that the necessary anchoring structure (not shown in the figures) are installed in advance at the top of the installation support 14 of the base structure 10. These can consist of, for example, fastening bolts welded (or fixed in another way) to reinforcement elements inside the concrete mass of the installation support, the ends of the bolts being fitted through holes in a mounting flange (not shown in the figures) fastened to the lower part of the installation structure 11, after which the flange can be tightened against the top of the base structure by nuts to be screwed at the ends of the fastening bolts. After the assembly of the mast 12, the nuts are unscrewed and the installation structure 11 is dismounted from around the finished wind power plant assembled on top of the tall base structure. After this, the fastening bolts can be either protected with any suitable encapsulations or, for example, removed by cutting them off at the head. Alternatively, the mounting of such an installation structure on the installation support 14 integrated in the high base structure 10 could also be implemented by providing threaded holes at the top of the installation support 14, in which holes a flange of the installation structure 11, corresponding to the description above, is fastened by separate fastening bolts which are removed after the installation. In this case, the fastening holes of the installation support 14 can be protected for later use, for example, simply by installing plugs fitting in the holes, or by covering the holes with lids to be fixed onto them.

In the embodiment shown in Figs. 3a to 3c, the outer diameter of the top 16a of the high base structure 16 is approximately equal to the outer diameter of the mast of the wind power mill to be mounted onto it. In this case, a separate installation support 17 consisting of at least two elements is installed at the top of the base structure. As shown in Fig. 3c, the installation support 17 has a conical inner surface 17c so that the part with the largest diameter of the inner cone is at the lower edge 17b of the installation support 17, and the smallest part is at the upper edge 17a so that the inner diameter of the upper edge 15c corresponds to the outer diameter of the top 16a of the base structure 16, and the diameter of the lower part corresponds to that outer diameter of the base structure, which the conical base structure 16 has at the distance equal to the length of the installation support 17 from the top 16a of the base structure. The outer surface 17d of the installation support 17 is cylindrical and has a diameter at least equal to the outer diameter of the installation structure to be mounted on top of it. Thus, the installation structure can be mounted on top of the installation support 17, for example, in a way similar to that shown in Figs. 2a to 2c.

The installation support 18 shown in Figs. 4a to 4c is composed of several support elements 20 fastened to the upper part of the base structure 19. These support elements 20 are pieces separate from each other and made of, for example, metal sheet, anchored at their upper part to anchoring means 22 fastened to the upper part 21 of the base structure 19. These anchoring means 22 may be the same as or different from the means, to which the lowermost element of the mast is fixed after it has been placed in position and fastened to the upper elements of the mast. At their middle and lower parts, the support elements are fastened to the upper part of the side wall 23 of the base structure, in the way shown in the figures, at several points by means of fastening pieces 24 whose spacing from each other is in this case constant in the height direction of the side wall of the base structure. The fastening pieces 24 are connected to the upper part of the side wall 23 by fastening means which may be, for example in the case of a reinforced concrete structure, threaded rods anchored to the reinforcement elements inside the side wall, to which rods the fastening pieces 24 are connected by means of holes formed at their ends at the side wall so that the threaded rods are fitted in the holes in the fastening pieces 24 and tightened against the side wall 23 by means of nuts to be screwed on the threaded rods. The fixing of the fastening pieces may be different as well. It is essential that the fastening pieces provide a fastening of the support elements 20 which is capable of bearing the loads caused by the installation structure on the support elements 20, and distributing this load to the upper part of the base structure 19 as evenly as possible so that no local loads are formed there, which would cause stresses exceeding the highest allowed stress of the side wall of the base structure. The number of support elements 20 may vary depending on, for example, the diameters of the mast to be mounted and of the top of the base structure. Advantageously, however, there are at least three support elements 20, so that the installation structure will not cause other than vertical supporting forces on the support elements 20.

Using the installation structure according to Figs. 2a to 2c, it is thus possible to use either the installation support integrated in the base structure shown in these figures, the installation support shown in Figs. 3a to 3c, or the installation support shown in Figs. 4a to 4c. By means of the installation support, the upper part of the base structure is provided with a support structure, on top of which the installation structure can be supported for the time of installation of the mast of the wind power plant. In the case of Figs. 2a to 2c, the installation support is left in the base structure after the installation of the wind power plant, but in the embodiments of Figs. 3a to 3c and 4a to 4c, it is removed from around the upper part of the base structure after the mounting of the mast and the nacelle part of the wind power plant.

The mast itself is assembled in a way corresponding to that presented in the application FI 20096161, that is, so that the uppermost element of the mast is brought into the installation structure first. After this, the uppermost part of the mast is lifted by the crane device in the installation structure, after which the nacelle part (and the wings of the wind power plant) can be mounted at its top and the next lower mast element underneath it. After these steps, the nacelle part, the uppermost mast element, and the next lower mast elements to be mounted on it are always lifted upward, at least by the height of the next mast element so that the next lower mast element can be fixed underneath the preceding upper elements. After the mounting of the lowermost mast element, the finished mast is mounted at the bottom of the lowermost mast element onto the base structure. After this step, the assembly is usually finished, and the installation structure is dismounted from the top of the installation support in the upper part of the base structure, and the installation support is also removed, if it is an installation support of the kind shown in Figs. 3a to 3c or 4a to 4c, installed afterwards to the base structure.

The apparatuses of the type shown in Figs. 1a and 1b as well as in Figs. 2a to 2c, 3a to 3c and 4a to 4c, for mounting a wind power plant on top of a high base structure, can be implemented in many respects in ways different from the example embodiments presented above. First of all, it should be taken into account that the high base structure, on top of which the wind power plant is mounted, can also be made of materials other than concrete, and it may be a solid piece or composed of separate parts having, for example, a lattice structure. Materials for the base structure may thus include at least various metals, particularly steel, as well as various composite materials and, for example, natural stone. A solution similar to Figs. 1 a and 1 b may comprise, for example, a base part having the height of one mast element, and an installation part placed higher. It includes an installation structure similar to Figs. 1 a and 1 b, which is part of the base structure and remains in the base structure after the assembly of the wind power plant. Such an application with a base part can thus be mounted, for example, at an installation site in shallow waters at a coast without applying a separate installation structure. For facilitating its foundation and assembly, it can be composed of several parts which are connected to each other at the site, either by removable joints (flange joints or the like) or by solid joints (welding and concrete casting) so that the transportation does not require large transport and/or crane vessels whose draught would restrict the selection of the installation site. In embodiments similar to Figs. 3a to 3c and 4a to 4c, a separate installation support can still be made of installation supports formed in various ways. When mounting on solid land, it is possible to use guy cables for supporting the installation structure and also the mast of the wind power plant, if this is considered necessary, for example, due to the soil structure or the great height of the mast. In some applications, the upper part of the base structure may be provided with an auxiliary supporting structure formed in it (for example, one or more lugs formed underneath the lower edge of the installation support), against which the removable installation support can be supported by simpler supporting pieces than those described above, and possibly with a smaller number of fastening means to be installed in the upper part of the base structure. The embodiments shown in Figs. 4a to 4c may comprise a control device for controlling the height of the upper surfaces of the support elements (for example hydraulically or mechanically), wherein the position of the installation structure can be adjusted by the height control of the support elements to a vertical position as accurately as possible, which also facilitates the installation of the mast to a vertical position as accurately as possible.

Furthermore, the apparatus according to the invention may be implemented in such a way that thanks to it, the mast elements to be connected on top of each other in the high base structure may be so-called full-length mast elements. The full-length mast elements are mast elements with flanges; that is, a fixing flange is provided at their both ends or at least one end, to connect these elements on top of each other by flange joints. The installation structure has a height of, for example, 35 to 40 metres, and the jacks used as the lifting device for the mast elements are placed at the height of about 25 metres from the floor level of the installation structure (in the case of a separate base structure, from its top). In this case, the lifting bars to be fastened to the sides of the mast elements and movable upwards by jacks are so long that they extend above the installation structure at the final stage of lifting. Furthermore, guides (for example, a supporting profile at the end of a horizontally mounted beam or rod, parallel to the lifting rods; rolls or a sliding surface being connected to the inner surface of the profile, if necessary) are provided at the top of the installation structure to support the lifting rods particularly at the stage when the mast element is lifted so high that its bottom is flush with the jacks. In such an embodiment, the door opening of the installation structure must also be about 20 metres in height, or even higher, so that a full-length mast element can be fitted inside the installation structure and simultaneously turned to the vertical position. The full-length mast element must also be supported particularly well after it has been transferred to the inside of the installation structure and turned to the vertical position. Here, it is possible to use auxiliary supports installed in the installation structure, which supports can be placed, for example, above half-way of the frame of the installation structure in the height direction. Such an embodiment has the advantage that it can be used to avoid welding of the mast elements when they are connected to each other, as well as the need for painting caused by welding during or after the installation. Furthermore, if desired, the mast can be composed of a smaller number of separate elements (at easy installation sites), and the flange joints enable the dismounting of the mast of the wind power plant without breaking it, because the mast elements can be later detached from each other by opening the fastening bolts of the flange joints.

The method and the apparatus according to the invention for installing a wind power plant in a tall base structure are not limited to the above described example embodiments but may vary within the scope of the inventive idea presented in the appended claims.

## Claims

1. A method for mounting a wind power plant in a high base structure (1; 10; 16; 19), in which method
- a high base structure (1, 10; 16; 19) is brought to and installed at the site of installation of the wind power plant;
- the mast (12) of the wind power plant, divided into at least two pieces shorter than the length of the whole mast (12), and the other parts of the wind power plant are brought to the vicinity of the high base structure (1; 10; 16; 19);
- the wind power plant is installed by using an installation structure (1; 11), in which the mast (12) of the wind power plant is assembled from elements in such a way that the uppermost element of the mast (12) is brought to the installation structure (1; 11) first, and after that the lower elements of the mast (12) so that the preceding installed elements of the mast (12) are lifted upwards at least by the height of the next element of the mast (12), the next lower element of the mast (12) is transferred underneath the upper elements of the mast (12) and fixed at its top to the bottom of the next upper element of the mast (12);
- the lowermost element of the mast (12) of the wind power plant is connected at its bottom to the high base structure (1; 10; 16; 19);
and in which method
- the installation structure (1, 11) used is the high base structure (1);
- the high base structure (1) is provided with means (8) for lifting elements of the mast (12) upwards and connecting on the top of each other,
**characterized in that** the installation structure used is the high base structure (1) comprising an upwards open inner space (7) enclosed by a side wall (2), the inner diameter of the cross-section of the inner space (7) being at least the outer diameter of the elements of the mast (12), and that the elements of the mast (12) are transferred to the inside of the high base structure (1) through an inlet opening (5) in the high base structure (1).

2. The method according to claim 1, **characterized in that** the elements of the mast (12) are lifted upwards by a lifting device (8) in the high base structure (1) inside the base structure (1).

3. The method according to claim 1 or 2, **characterized in that** the other parts of the wind power plant to be fixed to the uppermost element of the mast (12) of the wind power plant are fastened to the uppermost element of the mast (12) before the next lower element of the mast (12) is transferred to the inside of the high base structure (1, 10; 16; 19).

4. The method according to any of the claims 1 to 3, **characterized in that** after the lifting of an element of the mast (12), the lowermost element of the mast (12) is connected to the high base structure (1, 10; 16; 19) at at least two separate points (3, 4) spaced from each other in the height direction of the mast.

5. The method according to any of the claims 1 to 4, **characterized in that** at least part of the means (8) by which the elements of the mast (12) were lifted upwards and fixed to each other during the assembly of the mast (12) are removed from the high base structure (1) after the installation of the wind power plant, at the latest.

6. A method for mounting a wind power plant in a high base structure (1; 10; 16; 19), in which method
- a high base structure (1, 10; 16; 19) is brought to and installed at the site of installation of the wind power plant;
- the mast (12) of the wind power plant, divided into at least two pieces shorter than the length of the whole mast (12), and the other parts of the wind power plant are brought to the vicinity of the base structure (1; 10; 16; 19);
- the wind power plant is installed by using an installation structure (1; 11), in which the mast (12) of the wind power plant is assembled from elements in such a way that the uppermost element of the mast (12) is brought to the installation structure (1; 11) first, and after that the lower elements of the mast (12) so that the preceding installed elements of the mast (12) are lifted upwards by the height of at least the next element of the mast (12), the next lower element of the mast (12) is transferred underneath the upper elements of the mast (12) and fixed at its upper part to the lower part of the next upper element of the mast (12);
- the lowermost element of the mast (12) of the wind power plant is connected at its bottom to the high base structure (1; 10; 16; 19);
- the top of the high base structure (10; 16; 19) is provided with an installation support (14) connected to it, or a separate installation support (17; 18) is connected to the top of the high base structure;
- the installation structure (11) is mounted on the support of the installation support (14, 17; 18), on top of the high base structure, for assembly of the wind power plant,
**characterized in that**
that the installation structure (11) used is an installation structure (11) comprising an upwards open inner space enclosed by a side wall, the inner diameter of the cross-section of the inner space being at least the outer diameter of the elements of the mast (12), and that the elements of the mast (12) are transferred to the inside of the installation structure (11) through an inlet opening in the installation structure (11).

7. The method according to claim 6, **characterized in that** the elements of the mast (12) of the wind power plant to be installed in water, and the other parts of the wind power plant are brought to the vicinity of the high base structure (10; 16; 19) and the installation structure (11) mounted on it, by a transport vessel floating in water.

8. The method according to claim 7, **characterized in that** the elements of the mast (12) are brought to the installation structure (1; 11) as a body divided into at least two pieces which are connected to form whole elements of the mast (12) inside the installation structure (1; 11).

9. The method according to claim 8, **characterized in that** at least part of the installation structure (11) is removed from the high base structure (10; 16; 19) after the installation of the wind power plant, at the latest.

10. An apparatus for mounting a wind power plant to a high base structure (1; 10; 16; 19), the apparatus comprising the high base structure (1; 10; 16; 19) and an installation structure (1; 11) with means (5 to 9; 13), by which means a mast (12) divided into at least two pieces shorter than the whole mast (12) of the wind power plant can be assembled in such a way that the uppermost element of the mast (12) is brought to the installation structure (1; 11) first; and then the lower elements of the mast (12) in such a way that the preceding installed elements of the mast (12) are lifted upwards, and the next lower element of the mast (12) is transferred underneath the upper elements of the mast (12) and fastened at its upper part to the lower part of the next upper element of the mast (12), and in which apparatus the installation structure (1; 11) is the high base structure (1) whose height is at least the height of one element of the mast (12), and that the high base structure (1) comprises means (8) which are removably fastened to it for lifting elements of the mast (12) upwards and fastening them to each other on top of each other, **characterized in that** a space (7) is provided inside the high base structure (1), whose inner diameter is at least the outer diameter of the elements of the mast (12), and which is open from above, and that the wall of the high base structure (1) is provided with at least one inlet opening (5) for moving elements of the mast from the outside to the inside of the high base structure (1).

11. The apparatus according to claim 10, **characterized in that** the means (8) connected to the high base structure (1) comprise at least a transfer device for moving elements of the mast (12) from the outside of the base structure (1) to the inside of the high base structure (1), and a lifting device (8) for lifting the elements of the mast (12) upwards.

12. An apparatus for mounting a wind power plant to a high base structure (1; 10; 16; 19), the apparatus comprising a high base structure (1; 10; 16; 19) and an installation structure (1; 11) with means (5 to 9; 13), by means of which a mast (12) divided into at least two pieces shorter than the whole mast (12) of the wind power plant can be assembled in such a way that the uppermost element of the mast (12) is brought to the installation structure first; and then the lower elements of the mast (12) in such a way that the preceding installed elements of the mast (12) are lifted upwards, and the next lower element of the mast (12) is transferred underneath the upper elements of the mast (12) and connected at its upper part to the lower part of the next upper element of the mast (12), and in which apparatus the upper part of the high base structure (10; 16; 19) is provided with an installation support (14) formed in it, or a separately connected installation support (17; 18), to which the installation structure (11) separate from the high base structure (10; 16; 19) can be fastened, **characterized in that** a space is provided inside the installation structure (11), whose inner diameter is at least the outer diameter of the elements of the mast (12), and which is open from above, and that the wall of the installation structure (11) is provided with at least one inlet opening for moving elements of the mast (12) from the outside to the inside of the installation structure (11).

13. The apparatus according to claim 12, **characterized in that** the installation support (17; 18) comprises at least one piece (17; 20) connected to the upper part of the high base structure (16; 19), which piece encloses at least partly the upper part of the high base structure (16; 19) and extends from the height level of the top (16a; 21) of the high base structure downwards.

14. The apparatus according to claim 12 or 13, **characterized in that** the installation support (18) is composed of at least two support elements (20) separate from each other and connected to the upper part (21) of the base structure.

## Patentansprüche

1. Verfahren zur Montage einer Windenergieanlage in einer hohen Basisstruktur (1; 10; 16; 19), bei welchem Verfahren
- eine hohe Basisstruktur (1; 10; 16; 19) an den Ort der Installation der Windenergieanlage gebracht und dort installiert wird;
- der Mast (12) der Windenergieanlage, der in mindestens zwei Teile geteilt ist, die kleiner als die Länge des gesamten Mastes (12) sind, und die anderen Teile der Windenergieanlage in die Nähe der hohen Basisstruktur (1; 10; 16; 19) gebracht werden;
- die Windenergieanlage unter Verwendung einer Installationsstruktur (1; 11) installiert wird, in der der Mast (12) der Windenergieanlage aus Elementen derart zusammengebaut ist, dass das oberste Element des Mastes (12) zuerst an die Installationsstruktur (1; 11) gebracht wird und danach die unteren Elemente des Mastes (12), so dass die zuvor installierten Elemente des Mastes (12) nach oben um mindestens die Höhe des nächsten Elements des Mastes (12) angehoben werden, das nächste untere Element des Mastes (12) unter die oberen Elemente des Mastes (12) befördert wird und an seinem oberen Ende am Boden des nächsten oberen Elements des Mastes (12) befestigt wird;
- das unterste Element des Mastes (12) der Windenergieanlage an seinem Boden mit der hohen Basisstruktur (1; 10; 16; 19) verbunden wird; und in dem Verfahren
- die verwendete Installationsstruktur (1, 11) die hohe Basisstruktur (1) ist;
- die hohe Basisstruktur (1) mit Mitteln (8) zum Anheben von Elementen des Mastes (12) nach oben und zum Befestigen am oberen Ende eines jeden vorgesehen ist,
**dadurch gekennzeichnet, dass** die verwendete Installationsstruktur die hohe Basisstruktur (1) ist, die einen nach oben offenen Innenraum (7) aufweist, der von einer Seitenwand (2) umgeben ist, wobei der Innendurchmesser des Querschnitts des Innenraums (7) mindestens der Außendurchmesser der Elemente des Mastes (12) ist, und dass die Elemente des Mastes (12) nach innen in die hohe Basisstruktur (1) durch eine Einlassöffnung (5) in der hohen Basisstruktur (1) befördert werden.

2. Verfahren nach Anspruch 1, **dadurch gekennzeichnet, dass** die Elemente des Mastes (12) nach oben durch eine Hebevorrichtung (8) in der hohen Basisstruktur innen in der Basisstruktur (1) angehoben werden.

3. Verfahren nach Anspruch 1 oder 2, **dadurch gekennzeichnet, dass** die anderen Teile der Windenergieanlage, die an dem obersten Element des Mastes (12) der Windenergieanlage anzubringen sind, an dem obersten Element des Mastes (12) befestigt werden, bevor das nächste untere Element des Mastes (12) nach innen in die hohe Basisstruktur (1; 10; 16; 19) befördert wird.

4. Verfahren nach einem der Ansprüche 1 bis 3, **dadurch gekennzeichnet, dass** nach Anheben eines Elementes des Mastes (12) das unterste Element des Mastes (12) mit der hohen Basisstruktur (1, 10; 16, 19) an mindestens zwei getrennten Punkten (3, 4),die voneinander in Höhenrichtung des Mastes beabstandet sind, verbunden wird.

5. Verfahren nach einem der Ansprüche 1 bis 4, **dadurch gekennzeichnet, dass** mindestens ein Teil der Mittel (8), mittels der die Elemente des Mastes (12) nach oben angehoben und während der Montage des Mastes (12) aneinander befestigt wurden, von der hohen Basisstruktur (1) spätestens nach der Installation der Windenergieanlage entfernt wird.

6. Verfahren zur Montage einer Windenergieanlage in einer hohen Basisstruktur (1; 10; 16; 19), bei welchem Verfahren
- eine hohe Basisstruktur (1; 10; 16; 19) an den Ort der Installation der Windenergieanlage gebracht und dort installiert wird;
- der Mast (12) der Windenergieanlage, der in mindestens zwei Teile geteilt ist, die kleiner als die Länge des gesamten Mastes (12) sind, und die anderen Teile der Windenergieanlage in die Nähe der Basisstruktur (1; 10; 16; 19) gebracht werden;
- die Windenergieanlage unter Verwendung einer Installationsstruktur (1; 11) installiert wird, in der der Mast (12) der Windenergieanlage aus Elementen derart zusammengebaut ist, dass das oberste Element des Mastes (12) zuerst an die Installationsstruktur (1; 11) gebracht wird und danach die unteren Elemente des Mastes (12), so dass die zuvor installierten Elemente des Mastes (12) nach oben um mindestens die Höhe des nächsten Elements des Mastes (12) angehoben werden, das nächste untere Element des Mastes (12) unter die oberen Elemente des Mastes (12) befördert wird und an seinem oberen Teil am unteren Teil des nächsten oberen Elements des Mastes (12) befestigt wird;
- das unterste Element des Mastes (12) der Windenergieanlage an seinem Boden mit der hohen Basisstruktur (1; 10; 16; 19) verbunden wird;
- das obere Ende der hohen Basisstruktur (10; 16; 19) mit einer damit verbundenen Montagehalterung (14) versehen ist, oder eine separate Montagehalterung (17; 18) mit dem oberen Ende der hohen Basisstruktur verbunden ist;
- die Installationsstruktur (11) an der Halterung der Montagehalterung (14,17; 18) am oberen Ende der hohen Basisstruktur für die Montage der Windenergieanlage befestigt ist,
**dadurch gekennzeichnet, dass**
die verwendete Installationsstruktur (11) eine Installationsstruktur (11) ist, die einen nach oben offenen Innenraum aufweist, der von einer Seitenwand umgeben ist, wobei der Innendurchmesser des Querschnitts des Innenraums mindestens der Außendurchmesser der Elemente des Mastes (12) ist, und dass die Elemente des Mastes (12) nach innen in die Installationsstruktur (11) durch eine Einlassöffnung der Installationsstruktur (11) befördert werden.

7. Verfahren gemäß Anspruch 6, **dadurch gekennzeichnet, dass** die im Wasser zu installierenden Elemente des Mastes (12) der Windenergieanlage und die anderen Teile der Windenergieanlage mit einem auf dem Wasser schwimmenden Transportschiff in die Nähe der hohen Basisstruktur (10; 16; 19) und der darauf befestigten Installationsstruktur (11) gebracht werden.

8. Verfahren nach Anspruch 7, **dadurch gekennzeichnet, dass** die Elemente des Mastes (12) an die Installationsstruktur (1; 11) als ein Körper gebracht werden, der in mindestens zwei Teile geteilt ist, die miteinander verbunden sind, um ganze Elemente des Mastes (12) innerhalb der Installationsstruktur (1; 11) zu bilden.

9. Verfahren nach Anspruch 8, **dadurch gekennzeichnet, dass** zumindest ein Teil der Installationsstruktur (11) von der hohen Basisstruktur (10; 16; 19) spätestens nach der Installation der Windenergieanlage entfernt wird.

10. Vorrichtung zur Montage einer Windenergieanlage an einer hohen Basisstruktur (1; 10; 16; 19), wobei die Vorrichtung die hohe Basisstruktur (1; 10; 16; 19) und eine Installationsstruktur (1; 11) mit Mitteln (5 bis 9; 13) aufweist, mit welchen Mitteln ein Mast (12), der in mindestens zwei Teile geteilt ist, die kürzer als der gesamte Mast (12) der Windenergieanlage sind, so zusammengebaut werden kann, dass das oberste Element des Mastes (12) zuerst zur Installationsstruktur (1; 11) gebracht wird; und danach die unteren Elemente des Mastes (12) in der Art, dass die zuvor installierten Elemente des Mastes (12) nach oben angehoben werden, und das nächste untere Element des Mastes (12) unter die oberen Elemente des Mastes (12) befördert und an ihrem oberen Teil an dem unteren Teil des nächsten oberen Elements des Mastes (12) befestigt wird, und bei welcher Vorrichtung die Installationsstruktur (1; 11) die hohe Basisstruktur (1) ist, deren Höhe mindestens die Höhe eines Elements des Mastes (12) ist, und dass die hohe Basisstruktur (1) Mittel (8) aufweist, die daran entfernbar befestigt sind, zum Anheben der Elemente des Mastes (12) nach oben und zum Befestigen dieser aneinander und übereinander, **dadurch gekennzeichnet, dass** ein Raum (7) in der hohen Basisstruktur (1) vorgesehen ist, dessen Innendurchmesser mindestens der Außendurchmesser der Elemente des Mastes (12) ist, und der von oben offen ist, und dass die Wand der hohen Basisstruktur (1) mit mindestens einer Einlassöffnung (5) zum Bewegen der Elemente des Mastes von außen nach innen in die hohe Basisstruktur (1) vorgesehen ist.

11. Vorrichtung gemäß Anspruch 10, **dadurch gekennzeichnet, dass** die mit der hohen Basisstruktur (1) verbundenen Mittel (8) mindestens eine Beförderungsvorrichtung zum Bewegen der Elemente des Mastes (12) von außerhalb der Basisstruktur (1) nach innen in die hohe Basisstruktur (1) und eine Hebevorrichtung (8) zum Anheben der Elemente des Mastes (12) nach oben aufweisen.

12. Vorrichtung zur Montage einer Windenergieanlage an einer hohen Basisstruktur (1; 10; 16; 19), wobei die Vorrichtung die hohe Basisstruktur (1; 10; 16; 19) und eine Installationsstruktur (1; 11) mit Mitteln (5 bis 9; 13) aufweist, mit welchen Mitteln ein Mast (12), der in mindestens zwei Teile geteilt ist, die kürzer als der gesamte Mast (12) der Windenergieanlage sind, so zusammengebaut werden kann, dass das oberste Element des Mastes (12) zuerst an die Installationsstruktur gebracht wird; und danach die unteren Elemente des Mastes (12) in der Art, dass die zuvor installierten Elemente des Mastes (12) nach oben angehoben werden, und das nächste untere Element des Mastes (12) unter die oberen Elemente des Mastes (12) befördert und an seinem oberen Teil an dem unteren Teil des nächsten oberen Elements des Mastes (12) befestigt wird, und bei welcher Vorrichtung der obere Teil der hohen Basisstruktur (10; 16; 19) mit einer darin gebildeten Montagehalterung (14) versehen ist, oder eine getrennt angeschlossene Montagehalterung (17; 18), an der die Installationsstruktur (11) getrennt von der hohen Basisstruktur (10; 16; 19) befestigt werden kann, **dadurch gekennzeichnet, dass** ein Raum in der Installationsstruktur (11) vorgesehen ist, dessen Innendurchmesser mindestens der Außendurchmesser der Elemente des Mastes (12) ist, und der von oben offen ist, und dass die Wand der Installationsstruktur (11) mit mindestens einer Einlassöffnung zum Bewegen der Elemente des Mastes (12) von außen nach innen in die Installationsstruktur (11) vorgesehen ist.

13. Vorrichtung nach Anspruch 12, **dadurch gekennzeichnet, dass** die Montagehalterung (17; 18) mindestens ein Teil (17; 20) umfasst, das mit dem oberen Teil der hohen Basisstruktur (16; 19) verbunden ist, wobei das Teil mindestens teilweise den oberen Teil der hohen Basisstruktur (16; 19) umschließt und sich von dem Höhenniveau des oberen Endes (16a, 21) der hohen Basisstruktur nach unten erstreckt.

14. Vorrichtung nach Anspruch 12 oder 13, **dadurch gekennzeichnet, dass** die Montagehalterung (18) aus zumindest zwei Stützelementen (20) besteht, die voneinander getrennt und am oberen Teil (21) der Basisstruktur befestigt sind.

## Revendications

1. Procédé de montage d'une centrale éolienne dans une structure base haute (1 ; 10 ; 16 ; 19), dans lequel procédé
- une structure base haute (1 ; 10 ; 16 ; 19) est amenée jusqu'au et installée sur le site d'installation de la centrale éolienne ;
- le mât (12) de la centrale éolienne, divisé en au moins deux parties plus courtes que la longueur de la totalité du mât (12), et les autres parties de la centrale éolienne sont amenés à proximité de la structure base haute (1 ; 10 ; 16 ; 19) ;
- la centrale éolienne est installée en utilisant une structure (1; 11) d'installation, dans laquelle le mât (12) de la centrale éolienne est assemblé à partir d'éléments de telle manière que l'élément le plus supérieur du mât (12) est amené jusqu'à la structure (1 ; 11) d'installation en premier, et après cela les éléments inférieurs du mât (12), de sorte que les éléments précédemment installés du mât (12) sont levés vers le haut au moins de la hauteur de l'élément suivant du mât (12), l'élément inférieur suivant du mât (12) est transféré en-dessous des éléments supérieurs du mât (12) et fixé en son sommet au fond de l'élément supérieur suivant du mât (12) ;
- l'élément le plus inférieur du mât (12) de la centrale éolienne est connecté au niveau de son fond à la structure base haute (1 ; 10 ; 16 ; 19) ;
et dans lequel procédé
- la structure (1 ; 11) d'installation utilisée est la structure base haute (1) ;
- la structure base haute (1) est prévue avec un moyen (8) pour lever des éléments du mât (12) vers le haut et les connecter l'un par-dessus l'autre,
**caractérisé en ce que** la structure d'installation utilisée est la structure base haute (1) comprenant un espace (7) intérieur ouvert vers le haut renfermé par une paroi latérale (2), le diamètre intérieur de la section transversale de l'espace (7) intérieur étant au moins le diamètre extérieur des éléments du mât (12), et **en ce que** les éléments du mât (12) sont transférés à l'intérieur de la structure base haute (1) à travers une ouverture (5) d'entrée dans la structure base haute (1).

2. Procédé selon la revendication 1, **caractérisé en ce que** les éléments du mât (12) sont levés vers le haut par un dispositif (8) de levage dans la structure base haute (1) à l'intérieur de la structure base (1).

3. Procédé selon la revendication 1 ou 2, **caractérisé en ce que** les autres parties de la centrale éolienne destinées à être fixées sur l'élément le plus supérieur du mât (12) de la centrale éolienne sont fixées sur l'élément le plus supérieur du mât (12) avant que l'élément inférieur suivant du mât (12) ne soit transféré dans l'intérieur de la structure base haute (1 ; 10 ; 16 ; 19).

4. Procédé selon l'une quelconque des revendications 1 à 3, **caractérisé en ce que**, après le levage d'un élément du mât (12), l'élément le plus inférieur du mât (12) est connecté à la structure base haute (1 ; 10 ; 16 ; 19) en au moins deux points (3, 4) séparés espacés l'un de l'autre dans le sens de la hauteur du mât.

5. Procédé selon l'une quelconque des revendications 1 à 4, **caractérisé en ce qu'**au moins une partie du moyen (8) par lequel les éléments du mât (12) ont été levés vers le haut et fixés les uns aux autres lors de l'assemblage du mât (12) est démontée de la structure base haute (1) après l'installation de la centrale éolienne, au plus tard.

6. Procédé de montage d'une centrale éolienne dans une structure base haute (1 ; 10 ; 16 ; 19), dans lequel procédé
- une structure base haute (1 ; 10 ; 16 ; 19) est amenée jusqu'au et installée sur le site d'installation de la centrale éolienne ;
- le mât (12) de la centrale éolienne, divisé en au moins deux parties plus courtes que la longueur de la totalité du mât (12), et les autres parties de la centrale éolienne sont amenés à proximité de la structure base haute (1 ; 10 ; 16 ; 19) ;
- la centrale éolienne est installée en utilisant une structure (1 ; 11) d'installation, dans laquelle le mât (12) de la centrale éolienne est assemblé à partir d'éléments de telle manière que l'élément le plus supérieur du mât (12) est amené jusqu'à la structure (1 ; 11) d'installation en premier, et après cela les éléments inférieurs du mât (12), de sorte que les éléments précédemment installés du mât (12) sont levés vers le haut de la hauteur d'au moins l'élément suivant du mât (12), l'élément inférieur suivant du mât (12) est transféré en-dessous des éléments supérieurs du mât (12) et fixé en sa partie supérieure à la partie inférieure de l'élément supérieur suivant du mât (12) ;
- l'élément le plus inférieur du mât (12) de la centrale éolienne est connecté au niveau de son fond à la structure base haute (1 ; 10 ; 16 ; 19) ;
- le sommet de la structure base haute (10 ; 16 ; 19) est prévu avec un support (14) d'installation connecté à celui-ci, ou bien un support (17 ; 18) d'installation séparé est connecté au sommet de la structure base haute ;
- la structure (11) d'installation est montée sur le support du support (14 ; 17 ; 18) d'installation au sommet de la structure base haute, pour assemblage de la centrale éolienne,
**caractérisé en ce que**
la structure (11) d'installation utilisée est une structure (11) d'installation comprenant un espace intérieur ouvert vers le haut renfermé par une paroi latérale, le diamètre intérieur de la section transversale de l'espace intérieur étant au moins le diamètre extérieur des éléments du mât (12), et **en ce que** les éléments du mât (12) sont transférés à l'intérieur de la structure (11) d'installation à travers une ouverture d'entrée dans la structure (11) d'installation.

7. Procédé selon la revendication 6, **caractérisé en ce que** les éléments du mât (12) de la centrale éolienne destinée à être installée dans l'eau, et les autres parties de la centrale éolienne sont amenés à proximité de la structure base haute (10 ; 16 ; 19) et de la structure (11) d'installation montée sur celle-ci, par un navire de transport flottant dans l'eau.

8. Procédé selon la revendication 7, **caractérisé en ce que** les éléments du mât (12) sont amenés jusqu'à la structure (1 ; 11) d'installation comme un corps divisé en au moins deux parties qui sont connectées pour former des éléments entiers du mât (12) à l'intérieur de la structure (1 ; 11) d'installation.

9. Procédé selon la revendication 8, **caractérisé en ce qu'**au moins une partie de la structure (11) d'installation est démontée de la structure base haute (10 ; 16 ; 19) après l'installation de la centrale éolienne, au plus tard.

10. Appareil pour monter une centrale éolienne sur une structure base haute (1 ; 10 ; 16 ; 19), l'appareil comprenant la structure base haute (1 ; 10 ; 16 ; 19) et une structure (1 ; 11) d'installation avec des moyens (5 à 9 ; 13), par lesquels moyens un mât (12) divisé en au moins deux parties plus courtes que la totalité du mât (12) de la centrale éolienne peut être assemblé de telle manière que l'élément le plus supérieur du mât (12) est amené jusqu'à la structure (1 ; 11) d'installation en premier; et ensuite les éléments inférieurs du mât (12), de sorte que les éléments précédemment installés du mât (12) sont levés vers le haut, et l'élément inférieur suivant du mât (12) est transféré en-dessous des éléments supérieurs du mât (12) et fixé en sa partie supérieure à la partie inférieure de l'élément supérieur suivant du mât (12), et dans lequel appareil la structure (1 ; 11) d'installation est la structure base haute (1) dont la hauteur est au moins la hauteur d'un élément du mât (12), et la structure base haute (1) comprend un moyen (8) qui est fixé de façon amovible à celle-ci pour lever des éléments du mât (12) vers le haut et les fixer les uns aux autres l'un par-dessus l'autre, **caractérisé en ce qu'**un espace (7) est prévu à l'intérieur de la structure base haute (1), dont le diamètre intérieur est au moins le diamètre extérieur des éléments du mât (12), et qui est ouvert par le haut, et **en ce que** la paroi de la structure base haute (1) est prévue avec au moins une ouverture (5) d'entrée pour déplacer des éléments du mât de l'extérieur jusqu'à l'intérieur de la structure base haute (1).

11. Appareil selon la revendication 10, **caractérisé en ce que** le moyen (8) connecté à la structure base haute (1) comprend au moins un dispositif de transfert pour déplacer des éléments du mât (12) de l'extérieur de la structure base (1) jusqu'à l'intérieur de la structure base haute (1), et un dispositif (8) de levage pour lever les éléments du mât (12) vers le haut.

12. Appareil pour monter une centrale éolienne sur une structure base haute (1 ; 10 ; 16 ; 19), l'appareil comprenant la structure base haute (1 ; 10 ; 16 ; 19) et une structure (1 ; 11) d'installation avec des moyens (5 à 9 ; 13), au moyen desquels un mât (12) divisé en au moins deux parties plus courtes que la totalité du mât (12) de la centrale éolienne peut être assemblé de telle manière que l'élément le plus supérieur du mât (12) est amené jusqu'à la structure d'installation en premier; et ensuite les éléments inférieurs du mât (12), de sorte que les éléments précédemment installés du mât (12) sont levés vers le haut, et l'élément inférieur suivant du mât (12) est transféré en-dessous des éléments supérieurs du mât (12) et connecté en sa partie supérieure à la partie inférieure de l'élément supérieur suivant du mât (12), et dans lequel appareil la partie supérieure de la structure base haute (10 ; 16 ; 19) est prévue avec un support (14) d'installation formé dans celle-ci, ou un support (17; 18) d'installation connecté séparément, auquel la structure (11) d'installation séparée de la structure base haute (10 ; 16 ; 19) peut être fixée, **caractérisé en ce qu'**un espace est prévu à l'intérieur de la structure (11) d'installation, dont le diamètre intérieur est au moins le diamètre extérieur des éléments du mât (12), et qui est ouvert par le haut, et **en ce que** la paroi de la structure (11) d'installation est prévue avec au moins une ouverture d'entrée pour déplacer des éléments du mât (12) de l'extérieur jusqu'à l'intérieur de la structure (11) d'installation.

13. Appareil selon la revendication 12, **caractérisé en ce que** le support (17 ; 18) d'installation comprend au moins une partie (17 ; 20) connectée à la partie supérieure de la structure base haute (16 ; 19), laquelle partie renferme au moins partiellement la partie supérieure de la structure base haute (16 ; 19) et s'étend à partir du niveau de hauteur du sommet (16a ; 21) de la structure base haute vers le bas.

14. Appareil selon la revendication 12 ou 13, **caractérisé en ce que** le support (18) d'installation est composé d'au moins deux éléments (20) support séparés l'un de l'autre et connectés à la partie supérieure (21) de la structure base.
